# EUROPÄISCHE PATENTSCHRIFT

(11) **EP 0 542 230 B1**
(45) Veröffentlichungstag und Bekanntmachung des Hinweises auf die Patenterteilung: **02.05.1997**
(21) Anmeldenummer: 92119291.0
(22) Anmeldetag: 11.11.1992
(51) Int. Cl.: A61C 9/00, A61C 19/02

(54) **Dentale Haltevorrichtung, Transportvorrichtung sowie Verfahren zur Erstellung eines Zahnabdrucks bzw. Kiefermodells**
Dental holding apparatus, transportation device as well as method for the malling of dental impressions
Appareil dentaire pour le maintien, dispositif de transport et procédé de fabrication des empreintes dentaires

(30) Priorität: 12.11.1991 DE 4137189
(43) Veröffentlichungstag der Anmeldung: 19.05.1993
(73) Patentinhaber: Foldenauer, Willi, Dr., D-81247 München (DE)
(72) Erfinder: Foldenauer, Willi, Dr., D-81247 München (DE)
(74) Vertreter: Turi, Michael, Dipl.-Phys.

(56) Entgegenhaltungen:
- EP-A- 0 235 717
- US-A- 4 600 251

## Beschreibung

Die Erfindung betrifft eine dentale Haltevorrichtung nach dem Oberbegriff des Anspruchs, eine Transportvorrichtung für wenigstens eine Haltevorrichtung nach dem Oberbegriff des Anspruchs 10, sowie ein Verfahren zur Erstellung eines Zahnabdrucks bzw. Kiefermodells von wenigstens Teilen eines menschlichen Gebisses nach dem Oberbegriff des Anspruchs 12.

Eine wichtige tägliche Tätigkeit Jedes Zahnarztes ist die Abdrucknahme der Zahn- und Kiefersituationen beim Patienten. Hierzu wird ein Abdrucklöffel verwendet, in dessen Ausnehmung ein relativ weiches Abdruckmaterial eingebracht ist. Bei dem Abdruckmaterial kann es sich um eine Masse verschiedenster Härte und Biegsamkeit handeln.

Welches Abdruckmaterial letztendlich verwendet wird, hängt von den Erfordernissen des zu erstellenden Abdruckes ab. Der Patient beißt in das sich im Abdrucklöffel befindliche Abdruckmaterial, wodurch zunächst in Form eines Abdrucks eine Abbildung seiner Zahn- und Kiefersituation unmittelbar vorliegt. Die auf diese Weise gewonnenen Abdrücke werden zur Erstellung eines Modells mit Gips oder Kunststoff ausgegossen. Sie bilden die Grundlage für die weitere technische Bearbeitung direkt in der Praxis eines Zahnarztes oder in einem externen Dentallabor.

Insbesondere bei der Verwendung von Alginat oder Hydrocoloid als Abdruckmaterial ergeben sich dabei jedoch folgende Probleme: Bei der Abdrucknahme mit Hilfe des Abdrucklöffels gelangt das nicht unmittelbar gefestigte Abdruckmaterial - das beim Herausnehmen des Abdrucklöffels aus dem Mund des Patienten plastisch ist - meist über Abschnitte der Abdrucklöffelränder. Das Abdruckmaterial ist an diesen Stellen also nicht durch die festen Bestandteile des Abdrucklöffels geschützt. Da das Abdruckmaterial in seiner Form veränderbar ist, reagiert es auf äußere Kraftbeanspruchung dahingehend, daß es sich verbiegt und dementsprechend verformt. Ein präziser Abdruck der Zahn- und Kiefersituation, der im wesentlichen nur geringfügigen Toleranzen unterliegen darf, ist auf diese Weise wesentlich fehlerhaft verändert. Es muß eine sehr aufwendige Nacharbeit stattfinden, um wieder den tatsächlichen Verhältnissen der Zahn- und Kiefersituation Rechnung zu tragen. In der Praxis findet eine derartige Verbiegung und Verformung des Abdruckmaterials insbesondere dann statt, wenn der Abdrucklöffel mit seinem über die Kanten übergetretenen Abdruckmaterial auf eine feste Unterlage gelegt wird. Die feste Unterlage bewirkt den eine ungewünschte Veränderung bewirkenden Druck auf das über den Abdrucklöffel gedrehten Abdruckmaterial.

Eine gattungsgemäße dentale Haltevorrichtung ist aus der US-A-4,600,251 bekannt. Diese dentale Haltevorrichtung besteht aus einem Halterungsabschnitt nach Art einer Säule, der mehrere Ausnehmungen zur Aufnahme von Handhabungsabschnitten eines Abdrucklöffels aufweist. Wenn überhaupt, so wird der Abdrucklöffel durch Zusatzelemente im Halterungsabschnitt fixiert, aufgenommen.

Eine gattungsgemäße Transportvorrichtung in Form einer Abdeckhaube ist aus der EP-A 235 717 bekannt, welche die dentale Haltevorrichtung lediglich zu Transportzwecken umgibt. Die Abdeckhaube sorgt dafür, daß der den Abdruck ausfüllende Gips unter idealen Feuchtigkeitsbedingungen abbindet.

Aus beiden zuvor genannten Druckschriften ist das gattungsgemäße Verfahren bekannt.

Die Erfindung hat zum Ziel, die gattungsgemäße dentale Haltevorrichtung, die gattungsgemäße Transportvorrichtung sowie das gattungsgemäße Verfahren zu verbessern.

Erreicht wird dieses Ziel bei einer gattungsgemäßen dentalen Haltevorrichtung durch die kennzeichnenden Merkmale des Anspruchs 1. Bei einer gattungsgemäßen Transportvorrichtung wird dieses Ziel durch die kennzeichnenden Merkmale des Anspruchs 10 erreicht. Schließlich wird dieses Ziel bei einem gattungsgemäßen Verfahren durch die kennzeichnenden Merkmale des Anspruchs 12 erreicht.

Erfindungsgemäß wird also vermieden, daß die über Abdrucklöffelkanten tretende dentale Abdruckmasse von außen her unter Druck gelangt. Der Abdruck der Zahn- und Kiefersituation des Patienten entspricht somit den tatsächlichen Verhältnissen. Die Mehrwandigkeit des Halterungsabschnittes führt dazu, daß ein etwa horizontal eingebrachter Abdrucklöffel mit einer von dem Halterungsabschnitt selbst herrührenden Spannung beaufschlagt ist. Da der Abdrucklöffel mit unterschiedlichen Kräften auf die jeweiligen Schlitze in dem Halterungsabschnitt wirkt, werden automatisch die Wände, in denen die Schlitze angeordnet sind, unterschiedlich stark belastet. Insbesondere bei der U-förmigen, doppelwandigen Ausgestaltung kann ein Schenkel des U ein wenig nachgeben und wird dann dementsprechend automatisch nach außen, relativ zum anderen Schenkel, gebogen.

Besonders bevorzugt weist die erfindungsgemäße Haltungsvorrichtung wenigstens einen Bodenabschnitt auf, der zur Auflage auf einer Unterlage dient und mit dem wenigstens einen Halterungsabschnitt zur Aufnahme des wenigstens einen Abdrucklöffels verbunden ist (Anspruch 2). Der Bodenabschnitt gewährleistet, daß die Haltevorrichtung jederzeit abgestellt werden kann und sich das Laborpersonal nicht um die Ablage des Abdrucklöffels kümmern muß. Gleichzeitig wird durch den Bodenabschnitt vermieden, daß die Haltevorrichtung zusammen mit dem Abdrucklöffel ungewollt umfällt.

Der Halterungsabschnitt zur Aufnahme des wenigstens einen Abdrucklöffels liefert in Verbindung mit dem Bodenabschnitt dann den gewünschten Freiraum. Besonders bevorzugt sind bei einer weiteren Ausführungsform der erfindungsgemäßen Haltevorrichtung der Bodenabschnitt und der Halterungsabschnitt im wesentlichen L-förmig zueinander angeordnet (Anspruch 3). Diese L-förmige Anordnung gewährleistet eine vertikale Höhe des Abdrucklöffels gegenüber der Unterlage. Eine äußerst simple Kombination aus Auflage und Zurverfügungstellung des erforderlichen Freiraums für das über die Abdrucklöffelkanten tretende Abdruckmaterial ist hierdurch gewährleistet.

Bei einer weiteren bevorzugten Ausführungsform der erfindungsgemäßen Haltevorrichtung verläuft der Schlitz im Halterungsabschnitt etwa horizontal, ist bezüglich wenigstens einer Stirnseite des Halterungsabschnitts offen und dient zur Aufnahme wenigstens eines Griffes am vordersten Abschnitt eines Abdrucklöffels (Anspruch 4). Die Position der Schlitze im Halterungsabschnitt berücksichtigt die Ausmaße herkömmlicher auf dem Markt befindlichen Abdrucklöffel. Der Verwender der Haltevorrichtung muß lediglich den Griff in den Schlitz einschieben und kann dann davon ausgehen, daß der Abdrucklöffel zur jeweiligen Unterlage oder beispielsweise auch zu einem weiteren Abdrucklöffel ausreichend Abstand aufweist, damit ein externer Druck auf das übertretende Abdruckmaterial vermieden ist.

Bei einer anderen bevorzugten Ausführungsform der erfindungsgemäßen Haltevorrichtung sind der oder die Schlitz (e) im Halterungsabschnitt derart angeordnet, daß ihre gemeinsame, sie durchstoßende Mittelachse nach Auflage der Haltevorrichtung auf einer Unterlage schräg zu dieser Unterlage verläuft (Anspruch 5). Eine derartige Anordnung von Schlitzen trägt der üblichen Ausgestaltung eines Abdrucklöffels Rechnung. Der Griff am vordersten Abschnitt des Abdrucklöffels ist gegenüber dem Abdrucklöffel meist ein wenig nach unten geneigt. Dies ermöglicht eine bessere manuelle Hantierbarkeit des Abdrucklöffels insbesondere beim Herausnehmen aus dem Mund des Patienten.

Um insbesondere beim Transport der Haltevorrichtung ein Nichtverrutschen des Abdrucklöffels im Schlitz zu gewährleisten, sind bevorzugt Mittel, insbesondere Schraub- oder Klemmittel zum Fixieren des Abdrucklöffels vorgesehen (Anspruch 6). Besonders bevorzugt ist das Fixiermittel eine Schraube, die vorzugsweise in einer Öffnung im oberen Bereich des Halterungsabschnitts einführbar ist und bei aufgenommenem Griff des Abdrucklöffels in dem (den) Schlitz (en) diesen Griff fixierend mit Druck beaufschlagt (Anspruch 7). Die Schraube ist dabei bevorzugt mit einem Gewinde versehen. Um nicht unnötig Teile für den erforderlichen Gegendruck beim Einschrauben zu benötigen, weist die Öffnung im oberen Bereich des Halterungsabschnitts ein entsprechendes Gegengewinde für die Schraube auf. So muß die Schraube lediglich in die Öffnung eingedreht und mit ihrem vordersten Ende auf dem Griff aufliegen. Den nötigen festen Sitz liefert dann der Reibschluß zwischen dem Gewinde der Schraube und dem Gewinde der Öffnung im oberen Bereich des Halterungsabschnitts.

Besonders bevorzugt ist der Bodenabschnitt zum Zwecke einer stabilen Positionierung auf einer Unterlage großflächiger und/oder schwerer als der Halterungsabschnitt ausgebildet (Anspruch 8). Die gesamte Haltevorrichtung wird dadurch vor Umfallen geschützt. Besonders bevorzugt ist der Bodenabschnitt etwa schwalbenschwanzförmig, wobei insbesondere seine an den Halterungsabschnitt anschließende, geringste Breite seiner Fläche der Breite des Halterungsabschnitts entspricht (Anspruch 9). Bei gleicher Materialdicke der Haltevorrichtung, was sich insbesondere fertigungstechnisch positiv auswirkt, kann so eine wesentliche Standfestigkeit erzielt werden.

Bei einer bevorzugten Ausführungsform der erfindungsgemäßen Transportvorrichtung sind die Mittel zur Aufnahme und Fixierung Vorsprünge mit wenigstens einer horizontalen Nut, in die ein freier Schenkel eines U-förmigen Halterungsabschnitts einschiebbar ist (Anspruch 11). Hierdurch kann der zu bearbeitende Abdrucklöffel ohne Beschädigung seines übertretenden Abdruckmaterials zu einem externen Dentallabor transportiert werden. Die Haltevorrichtung mit dem fixierten Abdrucklöffel wird ohne Lösen der Fixierung in der Transportvorrichtung befestigt und zusammen mit der Transportvorrichtung abgesandt. Der horizontale Schlitz im Vorsprung der Transportvorrichtung ist vorzugsweise dabei wenigstens soweit von den Innenwänden der Transportvorrichtung beabstandet, daß ein aus dem Schlitz des Halterungsabschnitts hervorragender Abschnitt des Griffs des Abdrucklöffels dennoch nicht die Aufnahme der Haltevorrichtung im Schlitz der Ausnehmung verhindert.

Alternativ zu dieser bevorzugten Ausführungsform kann aber auch eine Halterung, bevorzugt eine Klemmhalterung, am Boden der Transportvorrichtung zur Halterung des Bodenabschnitts der Haltevorrichtung angeordnet sein.

Ausführungsbeispiele der Erfindung sind in den Zeichnungen dargestellt und werden im folgenden näher beschrieben:

Es zeigen:
- Fig. 1: ein perspektivische Ansicht einer Ausführungsform der erfindungsgemäßen Haltevorrichtung mit fixiertem Abdrucklöffel;
- Fig. 2: eine Seitenansicht der erfindungsgemäßen Haltevorrichtung;
- Fig. 3: eine Frontansicht der erfindungsgemäßen Haltevorrichtung;
- Fig. 4: eine Draufsicht von oben auf die erfindungsgemäße Haltevorrichtung und
- Fig. 5: eine perspektivische Ansicht der erfindgungsgemäßen Transportvorrichtung mit aufgenommener Haltevorrichtung und darin fixiertem Abdrucklöffel.

Es folgt die Erläuterung der Erfindung und deren weiterer Vorteile anhand der Zeichnungen nach Aufbau und ggf. auch nach Wirkungsweise der dargestellten Erfindung.

Im folgenden wird aus Gründen der Bequemlichkeit eine bestimmte Terminologie verwendet, die jedoch nicht einschränkend zu verstehen ist. Beispielsweise beziehen sich die Ausdrücke "oben", "unten", "von links" und "von rechts" auf die in der Zeichnung dargestellten Richtungen.

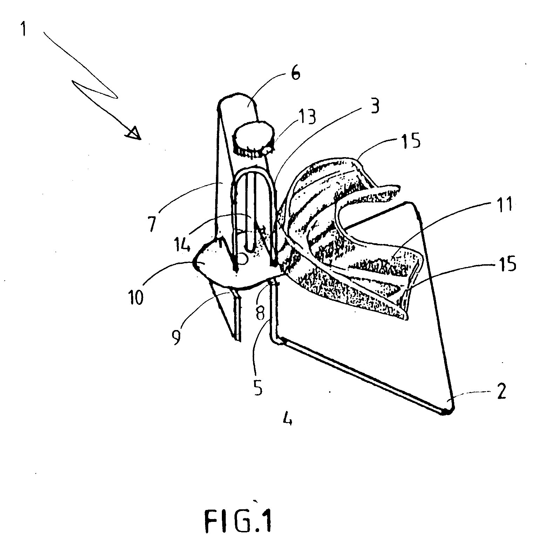

Fig. 1 zeigt eine Haltevorrichtung 1, die im wesentlichen aus einem schwalbenschwanzförmigen Bodenabschnitt 2 sowie einem am verjüngten Ende des schwalbenschwanzförmigen Bodenabschnitts 2 angeformten Halterungsabschnitt 3 besteht. Aus Gründen verfahrensökonomischer Herstellung weist der Bodenabschnitt 2 und der Halterungsabschnitt 3 im wesentlichen die gleiche Stärke, d.h. Dicke, auf.

Im Ausführungsbeispiel der Fig. 1 liegt der Bodenabschnitt 2 mit seiner Unterseite auf einer Unterlage 4 auf. Der Halterungsabschnitt 3 ist bei einer derartigen Auflage des Bodenabschnitts 2 der Haltevorrichtung 1 auf der Unterlage 4 im wesentlichen senkrecht zu dem Bodenabschnitt 2 angeordnet.

Der Halterungsabschnitt 3 hat in etwa U-Form. Dementsprechend besteht er aus einer Schenkelwand 5, einem daran anschließenden, U-förmigen oberen Bereich 6 und einer an diesen U-förmigen, oberen Bereich 6 anschließenden Schenkelwand 7. Die Schenkelwand 7 verläuft bei dieser Ausgestaltung etwa parallel zur Schenkelwand 5.

Die Schenkelwand 5 wie auch die Schenkelwand 7 weisen jeweils bezüglich der gleichen Stirnseite des Halterungsabschnitts 3 offene Schlitze 8 und 9 auf. Ein Griff 10 eines Abdrucklöffels 11 wird seitlich in diese Schlitze 8 und 9 eingeführt, bis der Griff 10 vorzugsweise an einer seitlichen Stirnfläche der jeweiligen Enden der Schlitze 8 und 9, anliegt.

Etwa mittig im U-förmigen oberen Bereich ist eine in der Fig. 1 nicht näher dargestellte Gewindebohrung 12 vorgesehen. Durch diese Gewindebohrung 12 wird eine Schraube 13 mit einem mit Gewinde versehenen Schraubenbolzen 14 eingeführt. Das vordere Ende des Schraubenbolzens 14 drückt bei Abwärtsbewegung der Schraube 13 auf den Griff 10 im Halterungsabschnitt 3. Der Griff 10 ist auf diese Weise in seiner Position fixiert. Zum Zwecke der Bewegung der Schraube 13 in Richtung des Griffes 10 ist ein Rändelgriff am Kopfabschnitt der Schraube 13 vorgesehen.
Derartig in seiner Lage fixiert, weist der Abdrucklöffel 11 einen Abstand zu dem Bodenabschnitt 2 auf. Beispielsweise über Kanten 15 des Abdrucklöffels 11 übertretendes Abdruckmaterial gelangt aufgrund des Freiraumes zwischen Abdrucklöffel 11 und Bodenabschnitt 2 nicht mit dem Bodenabschnitt 2 in Berührung.

Selbst wenn der Abdrucklöffel 11 mit aufgenommenem Abdruckmaterial beim Ausgießen mit Gips sehr schwer wird, stellt der Bodenabschnitt 2 aufgrund seiner speziellen Ausgestaltung sicher, daß die Haltevorrichtung 1 mit fixiertem Abdrucklöffel 11 kippstabil bleibt.

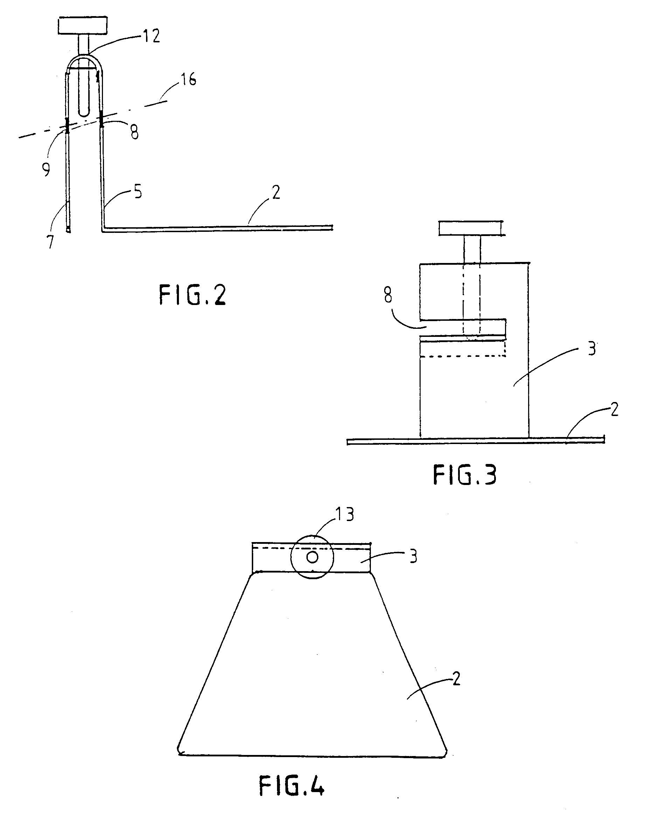

In der Seitenansicht gemäß Fig. 2 ist erkennbar, daß die beiden Schlitze 8 und 9 bezüglich des Bodenabschnitts 2 horizontal versetzt zueinander angeordnet sind. Eine durch die Schlitze 8 und 9 gedachte Mittelachse 16 verläuft demnach schräg zum Bodenabschnitt 2 und zwar - in Richtung von der Schenkelwand 5 zur Schenkelwand 7 - etwas nach unten geneigt. Diese Art der Anordnung der Schlitze 8 und 9 trägt dem Umstand Rechnung, daß bei parallel zum Bodenabschnitt 2 ausgerichtetem Abdrucklöffel 11 der Griff 10 des Abdrucklöffels 11 - ebenfalls in Richtung von der Schenkelwand 5 zur Schenkelwand 7 weisend - schräg nach unten verläuft.

Die Frontansicht gemäß Fig. 3 zeigt noch einmal die Breitenverhältnisse des vordersten Bereichs des Bodenabschnitts 2 zur Breite des Halterungsabschnitts 3. Die dadurch gewährte Stabilität der gesamten Haltevorrichtung 1 führt dazu, daß diese ohne Schwierigkeiten selbst auf einer Rüttelplatte angeordnet werden kann. In bekannter Weise werden bei einem derartigen Rüttelprozeß die noch verbliebenen Blasen des Ausgußmaterials, d.h. beispielsweise des Gipses aufgrund der permanenten Rüttelbewegung entfernt. Selbst während eines starken Rüttelns kippt die Haltevorrichtung 1 nicht um und hält den Abdrucklöffel 11 und das darin befindliche Material sicher.

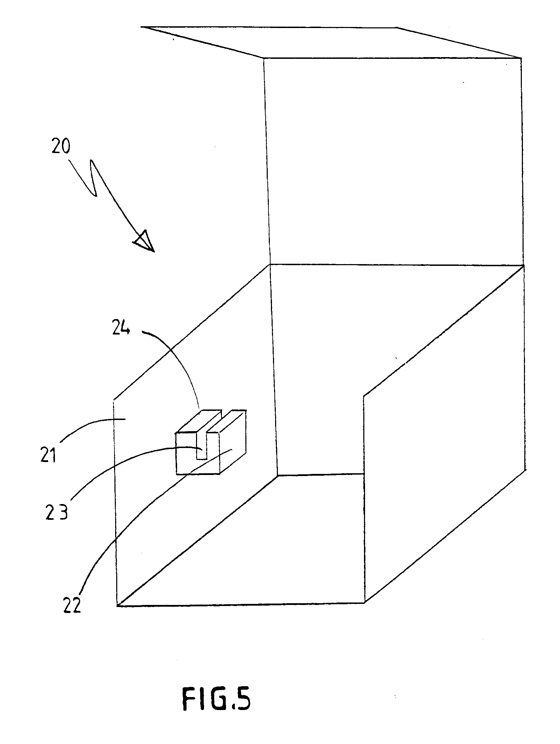

In der Draufsicht der Fig. 4 sind noch einmal der Bodenabschnitt 2 sowie der Halterungsabschnitt 3 und die Schraube 13 dargestellt.

Fig. 5 zeigt die perspektivische Ansicht einer Transportvorrichtung 20, insbesondere in Form eines Kartons. Derartige, allseitig verschließbare Kartons 20 existieren in mannigfaltiger Ausgestaltung auf dem Markt und dienen dazu, einem Dentallabor die Abdrucklöffel nebst Abdruck zu übersenden. Selbst wenn die Abdrucklöffel in einem derartigen, Karton 20 aufgenommen sind, besteht die Gefahr, daß das über die Kanten 15 des Abdrucklöffels 11 übergetretene Abdruckmaterial mit den Innenwänden des Kartons 20 in Berührung kommt. Selbst wenn der Abdrucklöffel 11 noch einmal innerhalb des Kartons 20 verpackt ist, können derartige negative Berührungen mit den Innenwänden des Kartons 20 auftreten. Dies führt ebenso zu den schon zum Stand der Technik geschilderten Nachteilen bei der Erzeugung des Gebißmodells in Bezug auf die Verformung des Abdruckmaterials.

Um nun den Freiraum der Haltevorrichtung 1 auch beim Transport auszunutzen, ist vorteilhaft an einer vertikalen Wandseite 21 des Kartons 20 eine der Aufnahme der Haltevorrichtung 1 dienende Aufnahmevorrichtung 22 vorgesehen. Diese Aufnahmevorrichtung 22 ist im wesentlichen U-förmig, wobei ihre Schenkel nach oben hin geöffnet sind. Eine aufgrund dieser U-förmigen Ausgestaltung der Aufnahmevorrichtung 22 gebildete Nut 23 hat vorzugsweise eine vertikale Tiefe, die im wesentlichen größer ist als der Abstand des aufliegenden Griffes 10 zum unteren Ende der Schenkelwand 7 des Halterungsabschnitts 3. Der im Querschnitt der Halterungsvorrichtung 1 unter dem Griff 10 befindliche, noch verbleibende, Abschnitt der Schenkelwand 7 kann somit auf einfache Weise in die Nut 23 des Kartons 20 geschoben werden.

Vorzugsweise ist die Aufnahmevorrichtung 22 in einer Höhe der vertikalen Wandseite 21 angeordnet, derart, daß der Bodenabschnitt 2 bei Aufnahme der Haltevorrichtung 1 in der Nut 23 auf dem Boden des Kartons 20 ruht oder zumindest einen Abstand zu diesem aufweist.

Damit in diesem in der Nut 23 aufgenommenen Zustand der Haltevorrichtung 1 der Griff 10 nicht stören kann, weist der nahe der vertikalen Wandseite 21 angeordnete Schenkel 24 der Aufnahmevorrichtung 22 eine Dicke auf, die wenigstens dem Abstand - im Querschnitt der Halterungsvorrichtung 1 - von eingebrachtem Abdrucklöffelende des Griffs 11 zu Schenkelwand 7, entspricht. In der Endlage kann dadurch der Griff 10 allerhöchstens an die vertikale Wandseite 21 angrenzen und dadurch weiter seine Fixierung stabilisiert sein.

Bei einer ganz besonders bevorzugten Ausführungsform der Transportvorrichtung bildet der Bodenabschnitt 2 der Haltevorrichtung im wesentlichen den Boden des Kartons. Hierbei kann zusätzlich noch der Halterungsabschnitt 3 der Haltevorrichtung 1 als vertikale Seitenfläche des Kartons ausgebildet sein.

## Patentansprüche

1. Dentale Haltevorrichtung mit wenigstens einem Halterungsabschnitt (3) zur Aufnahme wenigstens eines mit dentaler Abdruckmasse gefüllten Abdrucklöffels (11), derart, daß ein Freiraum zwischen über Abdrucklöffelkanten (15) tretendem Abdruckmaterial und der Haltevorrichtung (1) selbst oder deren Unterlage (4) besteht, **dadurch gekennzeichnet**, daß der Halterungsabschnitt (3) mehrwandig, insbesondere doppelwandig nach Art eines U mit in Richtung Unterlage (4) offenen Schenkeln (5, 7) ausgebildet ist, sich in jeder Schenkelwand (5, 7) ein Schlitz (8, 9) befindet und die Schlitze (8,9) sich umfangsmäßig etwa entsprechen.

2. Haltevorrichtung nach Anspruch 1, **gekennzeichnet** durch wenigstens einen Bodenabschnitt (2), der zur Auflage auf der Unterlage (4) dient, und mit dem wenigstens einen Halterungsabschnitt (3) zur Aufnahme des wenigstens einen Abdrucklöffels (11) verbunden ist.

3. Haltevorrichtung nach Anspruch 2, **dadurch gekennzeichnet**, daß der Bodenabschnitt (2) und der Halterungsabschnitt (3) im wesentlichen L-förmig zueinander angeordnet sind.

4. Haltevorrichtung nach Anspruch 2 oder 3, **dadurch gekennzeichnet**, daß der Schlitz (8, 9) im Halterungsabschnitt (3) etwa horizontal verläuft, bezüglich wenigstens einer Stirnseite des Halterungsabschnittes (3) offen ist und zur Aufnahme wenigstens eines Griffes (10) am vordersten Abschnitt eines Abdrucklöffels (11) dient.

5. Haltevorrichtung nach Anspruch 3 oder 4, **dadurch gekennzeichnet**, daß der oder die Schlitz(e) (8, 9) im Halterungsabschnitt (3) derart angeordnet sind, daß ihre gemeinsame, sie durchstoßende Mittelachse (16) nach Auflage der Haltevorrichtung (1) auf einer Unterlage (4) schräg zu dieser Unterlage (4) verläuft.

6. Haltevorrichtung nach einem der vorstehenden Ansprüche, **gekennzeichnet durch** Mittel (13), insbesondere Schraub- oder Klemmittel zum Fixieren des Abdrucklöffels (11).

7. Haltevorrichtung nach Anspruch 6, **dadurch gekennzeichnet**, daß das Fixiermittel eine Schraube (13) ist, die vorzugsweise in einer Öffnung (12) im oberen Bereich (6) des Halterungsabschnittes (3) einführbar ist und bei aufgenommenem Griff (10) des Abdrucklöffels (11) in dem (den) Schlitz(en) (8, 9) diesen Griff (10) fixierend mit Druck beaufschlagt.

8. Haltevorrichtung nach einem der Ansprüche 2 bis 7, **dadurch gekennzeichnet**, daß der Bodenabschnitt (2) zum Zwecke einer stabilen Positionierung auf einer Unterlage (4) großflächiger und/oder schwerer als der Halterungsabschnitt (3) ausgebildet ist.

9. Haltevorrichtung nach Anspruch 8, **dadurch gekennzeichnet**, daß der Bodenabschnitt (2) etwa schwalbenschwanzförmig ist, wobei insbesondere seine an den Halterungsabschnitt (3) anschließende geringste Breite seiner Fläche der Breite des Halterungsabschnittes (3) entspricht.

10. Kombination von Transportvorrichtung und wenigstens einer Haltevorrichtung nach einem der Ansprüche 1 bis 9, wobei die Transportvorrichtung (20) die wenigstens eine Haltevorrichtung (1) im Transportzustand allseitig umschließt und insbesondere Mittel zur Aufnahme und Fixierung von Haltevorrichtungen (1) vorgesehen sind, wobei das über Abdrucklöffelkanten (15) tretende Abdruckmaterial nach Fixierung des Abdrucklöffels (11) in der Haltevorrichtung (1) zum Zwecke des Transportes von den Wandflächen (21) der Transportvorrichtung (20) beabstandet ist, **dadurch gekennzeichnet**, daß das/die Mittel zur Aufnahme und Fixierung (22) der Haltevorrichtung(en) (1) an einer vertikalen Wandseite (21) der Transportvorrichtung (20) vorgesehen ist/sind.

11. Kombination nach Anspruch 10, **dadurch gekennzeichnet**, daß die Mittel zur Aufnahme und Fixierung Vorsprünge (22) sind, mit wenigstens einer horizontalen Nut (23), in die ein freier Schenkel (7) eines U-förmigen Halterungsabschnittes (3) einschiebbar ist.

12. Verfahren zur Erstellung eines Zahnabdruckes von wenigstens Teilen eines menschlichen Gebisses, bei dem mit Hilfe eines in einem Abdrucklöffel (11) befindlichen Abdruckmaterials ein Gebißabdruck abgenommen, dieser Abdruck zur Fertigung eines Gebißmodells mit Gips oder Kunststoff ausgegossen und das sich in dem Abdrucklöffel befindliche Abdruckmaterial bis bzw. während der Weiterverarbeitung zum Gebißmodell aus Gips oder Kunststoff in einer dentalen Haltevorrichtung freischwebend gehalten wird, **dadurch gekennzeichnet**, daß der vorderste Abschnitt des Abdrucklöffels, d.h. der sogenannte Griff (10) in wenigstens einen seitlich offenen Schlitz (8, 9) des etwa vertikalen Halterungsabschnittes (3) der Haltevorrichtung eingeführt und mit Hilfe einer von oben in den Halterungsabschnitt drehbar eingreifenden Schraube (13) in einer gegenüber der Umgebung berührungsfreien Endstellung fixiert wird.

## Claims

1. A dental retaining device having at least one mounting portion (3) for receiving at least one impression tray (11) filled with dental impression compound in such a manner that a space remains between impression material spilling over impression tray edges (15) and the retaining device (1) itself or its support (4),
**characterised in that** the mounting portion (3) is constructed with several walls, in particular two walls in the manner of a U with limbs (5, 7) open in the direction of the support (4), a slit (8, 9) is located in each limb wall (5, 7) and the slits (8, 9) roughly correspond to one another with respect to size.

2. A retaining device according to Claim 1,
**characterised by** at least one base portion (2), which serves to lie on the support (4), and having the at least one mounting portion (3) for receiving the at least one impression tray (11).

3. A retaining device according to Claim 2,
**characterised in that** the base portion (2) and the mounting portion (3) are disposed substantially L-shaped in relation to one another.

4. A retaining device according to Claim 2 or 3,
**characterised in that** the slit (8, 9) in the mounting portion (3) extends roughly horizontally, is open with respect to at least one end side of the mounting portion (3) and serves for receiving at least one handle (10) at the foremost portion of an impression tray (11).

5. A retaining device according to Claim 3 or 4,
**characterised in that** the slit or slits (8, 9) are disposed in the mounting portion (3) in such a manner that after laying the retaining device (1) on a support (4) their common centre axis (16) passing through them extends slantwise to this support (4).

6. A retaining device according to one of the preceding Claims,
**characterised by** means (13), in particular screwing or clamping means for fixing the impression tray (11).

7. A retaining device according to Claim 6,
**characterised in that** the fixing means is a screw (13), which can preferably be introduced in a aperture (12) in the upper region (6) of the mounting portion (3) and, when the handle (10) of the impression tray (11) is housed in the slit(s) (8, 9), presses on and fixes this handle (10).

8. A retaining device according to one of Claims 2 to 7,
**characterised in that** the base portion (2) is constructed with a larger area and/or heavier than the mounting portion (3) for the purpose of a stable positioning on a support (4).

9. A retaining device according to Claim 8,
**characterised in that** the base portion (2) is roughly dovetailed, with in particular its smallest width of its face adjoining the mounting portion (3) corresponding to the width of the mounting portion (3).

10. A combination of a transport device and at least one retaining device according to one of Claims 1 to 9, with the transport device (20) surrounding the at least one retaining device (1) on all sides in the transport state and in particular means for receiving and fixing retaining devices (1) being provided, with the impression material spilling over impression tray edges (15), after fixing the impression tray (11) in the retaining device (1), being spaced from the wall surfaces (21) of the transport device (20) for the purpose of transport,
**characterised in that** the means for receiving and attaching (22) the retaining device(s) (1) is/are provided at a vertical wall side (21) of the transport device (20).

11. A combination according to Claim 10,
**characterised in that** the means for receiving and attachment are projections (22), having at least one horizontal groove (23), into which a free limb (7) of a U-shaped mounting portion (3) can be pushed.

12. A method for preparing a tooth impression of at least parts of a human dentition, in which with the aid of an impression material situated in an impression tray (11) a dentition impression is taken, to produce a dentition model this impression is filled with plaster of Paris or plastics and the impression material situated in the impression tray is retained suspended in a dental retaining device up to and respectively during the further processing to the dentition model made of plaster of Paris or plastics,
**characterised in that** the foremost portion of the impression tray, i.e. the so-called handle (10), is introduced into at least one laterally open slit (8, 9) of the roughly vertical mounting portion (3) of the retaining device and is fixed by means of a screw (13) rotatably engaging from above into the mounting portion in an end position which is contact-free with respect to the surroundings.

## Revendications

1. Dispositif de maintien dentaire comportant au moins une partie de retenue (3) servant à recevoir au moins une coupe d'impression (11) remplie par une masse d'empreinte dentaire, de telle sorte qu'un espace libre est présent entre le matériau pour empreinte, qui s'étend au-dessus de bords (15) de la coupe d'impression, et le dispositif de retenue (1) lui-même ou son support (4), caractérisé en ce que la partie de retenue (3) est agencée à parois multiples et notamment est à paroi double, sous la forme d'un U comportant des branches (5, 7) s'ouvrant en direction du support (4), qu'une fente (8, 9) est située dans chaque paroi (5, 7) des branches et que les fentes (8, 9) se correspondent approximativement du point de vue de leur étendue.

2. Dispositif de maintien selon la revendication 1, caractérisé par au moins une partie de base (2), qui sert à prendre appui sur le support (4) et à laquelle est reliée au moins une partie de retenue (3) servant à recevoir au moins une coupe d'impression (11).

3. Dispositif de maintien selon la revendication 2, caractérisé en ce que la partie de base (2) et la partie de retenue (3) sont disposées l'une par rapport à l'autre essentiellement suivant une disposition en L.

4. Dispositif de maintien selon la revendication 2 ou 3, caractérisé en ce que la fente (8, 9) s'étend approximativement horizontalement dans la partie de retenue (3), est ouverte en direction d'au moins une face frontale de la partie de retenue (3) et sert à loger au moins un élément de préhension (10) situé sur la partie la plus en avant d'une coupe d'impression (11).

5. Dispositif de maintien selon la revendication 3 ou 4, caractérisé en ce que la ou les fentes (8, 9) sont disposées dans la partie de retenue (3) de telle sorte que leur axe médian commun (16), qui les traverse, s'étend obliquement par rapport au support (4) après mise en place du dispositif de fixation (1) sur ce support.

6. Dispositif de maintien selon l'une des revendications précédentes, caractérisé par des moyens (13), notamment des moyens de vissage ou de serrage servant à fixer la coupe d'empreinte (11).

7. Dispositif de maintien selon la revendication 6, caractérisé en ce que les moyens de fixation sont constitués par une vis (13), qui peut être introduite de préférence dans une ouverture (12) ménagée dans la partie supérieure (6) de la partie de retenue (3) et charge par une pression l'élément de préhension (10) de la coupe d'empreinte (11), lorsque cet élément de préhension est logé dans la ou les fentes (8, 9).

8. Dispositif de maintien selon l'une des revendications 2 à 7, caractérisé en ce que pour un positionnement stable sur un support (4) la partie de fond (2) est agencée avec une surface plus étendue et/ou est plus lourde que la partie de retenue (3).

9. Dispositif de maintien selon la revendication 8, caractérisé en ce que la partie de base (2) est approximativement en forme de queue d'aronde, auquel cas notamment la largeur la plus petite de sa surface, au niveau de la liaison à la partie de retenue (3), correspond à la largeur de cette partie de retenue (3).

10. Ensemble combiné formé d'un dispositif de transport et d'au moins un dispositif de maintien selon l'une des revendications 1 à 9, le dispositif de transport (20) entourant de tous côtés au moins un dispositif de maintien (1) dans l'état de transport, et dans lequel il est prévu, notamment des moyens pour loger et fixer des dispositifs de retenue (1), et dans lequel le matériau pour empreinte, qui s'étend au-delà de bords (15) de la coupe d'impression, est distante des surfaces de paroi (21) du dispositif de transport (20) après la fixation de la coupe d'impression (11) dans le dispositif de maintien (1), en vue du transport, caractérisé en ce que le/les moyens pour recevoir et fixer (22) le ou les dispositifs de maintien (1) est/sont prévus sur un côté de paroi vertical (21) du dispositif de transport (20).

11. Ensemble combiné selon la revendication 10, caractérisé en ce que les moyens de réception et de fixation sont des parties saillantes (22), comportant au moins une rainure horizontale (23), dans laquelle peut être insérée une branche libre (7) d'une partie de retenue en forme de U (3).

12. Procédé pour prendre une empreinte dentaire d'au moins certaines parties d'une dentition humaine, selon lequel on prend une empreinte de la dentition au moyen d'un matériau pour empreinte situé dans une coupe d'impression (11), on coule du plâtre ou une matière plastique dans cette empreinte pour former un modèle de dentition et on maintient à l'état flottant, dans un dispositif de maintien dentaire, le matériau pour empreinte situé dans la coupe d'impression jusqu'à ou pendant la poursuite du traitement pour l'obtention du modèle de dentition en plâtre ou en matière plastique, caractérisé en ce qu'on insère la partie la plus en avant de la coupe d'impression, c'est-à-dire ce qu'on appelle l'élément de préhension (10), dans au moins une fente ouverte latéralement (8, 9) de la partie approximativement verticale de retenue (3) du dispositif de maintien et qu'on la fixe dans une position finale sans contact par rapport à l'environnement, à l'aide d'une vis (13) qui s'engage à partir du haut, de manière à pouvoir tourner, dans la partie de retenue.
